# EUROPÄISCHE PATENTANMELDUNG

(11) **EP 2 521 054 A2**
(43) Veröffentlichungstag der Anmeldung: **07.11.2012**
(21) Anmeldenummer: 12166829.7
(22) Anmeldetag: 02.03.2009
(51) Int. Cl.: G06F 17/30

(54) **System und Verfahren zum Bereitstellen einer anpassbaren Portalseite**

(30) Priorität: 28.02.2008 DE 102008011568
(62) Teilanmeldung aus: 09002940.6
(71) Anmelder: Vodafone Holding GmbH, 40213 Düsseldorf (DE)
(72) Erfinder: Schockenhoff, Raymund, 40721 Hilden (DE); Faas, Volker, 40699 Erkrath (DE)
(74) Vertreter: Jostarndt, Hans-Dieter

(57) **Zusammenfassung**

Die Erfindung betrifft ein System zum Bereitstellen einer anpassbaren Portalseite an einem ersten Endgerät (102) eines Nutzers, wobei die Portalseite wenigstens ein ausgewähltes Widgetelement zum Anzeigen von Informationen und/oder Zugreifen auf einen webbasierten Dienst beinhaltet, welches eine grafische Darstellung bereitstellt, die ein Bestandteil einer Darstellung der Portalseite an einer Anzeigeeinrichtung (112) des ersten Endgeräts (102) ist, umfassend eine Servereinrichtung (106), von der die Portalseite mittels des ersten Endgeräts (102) abrufbar ist, wobei die Servereinrichtung (106) eine Schnittstelle bereitstellt, über welche das Widgetelement mittels eines zweiten Endgeräts (120) auswählbar ist. Ferner betrifft die Erfindung ein Verfahren zum Betreiben des Systems.

## Beschreibung

### Technisches Gebiet

Die Erfindung betrifft ein System und ein Verfahren zum Bereitstellen einer anpassbaren Portalseite an einem Endgerät. Bei dem Endgerät kann es sich um ein Kommunikationsendgerät, insbesondere um ein mobiles Kommunikationsendgerät handeln. Ferner betrifft die Erfindung ein Verfahren zum Bereitstellen einer eine Darstellung mehrerer Bedienelemente umfassenden Webseite an einer Anzeigeeinrichtung eines Endgerätes sowie eine Darstellungseinrichtung zur Durchführung des Verfahrens. Darüber hinaus betrifft die Erfindung ein Verfahren zum Bereitstellen von sich verändernden Informationen, die von einer Informationsquelle erhalten werden, innerhalb einer an einem Endgerät darstellbaren Webseite, sowie eine Servereinrichtung zur Durchführung des Verfahrens.

### Hintergrund der Erfindung

So genannte Webportale bieten Nutzern von Kommunikationsnetzen eine Zusammenstellung verschiedener Informationen und Zugriffsmöglichkeiten auf verschiedene webbasierte Funktionen auf einer einzigen Portalseite, die an einem mit dem Kommunikationsnetz verbundenen Endgerät dargestellt werden kann. Insbesondere kann eine Portalseite über das Internet bezogen und an einem mit dem Internet verbundenen Computer des Nutzers dargestellt werden. Gleichfalls kann eine Portalseite auch an einem mobilen Kommunikationsendgerät des Nutzers empfangen und zur Anzeige gebracht werden.

Auf einer Portalseite der genannten Art können insbesondere Nachrichten aus verschiedenen, den Nutzer interessierenden Gebieten dargestellt werden. Ferner kann der Nutzer von der Portalseite aus auf Dienste innerhalb des Kommunikationsnetzes zugreifen, beispielsweise auf in dem Kommunikationsnetz eingerichtete Suchdienste.

Portalseiten setzen sich in der Regel aus Elementen zusammen, die auch als Widgets bezeichnet werden und die Anzeige von Informationen aus verschiedenen Quellen bzw. verschiedenen Zusammenstellungen sowie den Zugriff auf verschiedene Dienste ermöglichen. Ein Widget stellt dabei eine grafische Darstellung bereit, welche die anzuzeigenden Informationen enthält und/oder Elemente für den Zugriff auf einen bestimmten Dienst umfasst. Bei diesen kann es sich beispielsweise um eine Eingabemaske zur Eingabe von Parametern handeln, die an den Dienst übergeben werden, und/oder um Bedienelemente zum Starten des Dienstes.

Widgets können von dem Nutzer unabhängig voneinander in die Portalseite eingebunden werden, so dass der Nutzer die Portalseite an seine Bedürfnisse anpassen kann.

### Darstellung der Erfindung

Es ist eine Aufgabe der vorliegenden Erfindung, eine möglichst komfortable Anpassung einer Portalseite zu ermöglichen.

Erfindungsgemäß wird diese Aufgabe durch ein System mit den Merkmalen des Patentanspruchs 1 und ein Verfahren mit den Merkmalen des Patentanspruchs 8 gelöst. Ausführungsformen des Systems sind in den abhängigen Ansprüchen angegeben.

Demgemäß wird ein System zum Bereitstellen einer anpassbaren Portalseite an einem ersten Endgerät eines Nutzers vorgeschlagen, wobei die Portalseite wenigstens ein ausgewähltes Widgetelement zum Anzeigen von Informationen und/oder Zugreifen auf einen webbasierten Dienst beinhaltet, welches eine grafische Darstellung bereitstellt, die ein Bestandteil einer Darstellung der Portalseite an einer Anzeigeeinrichtung des ersten Endgeräts ist. Das System umfasst eine Servereinrichtung, von der die Portalseite mittels des ersten Endgeräts abrufbar ist, wobei die Servereinrichtung eine Schnittstelle bereitstellt, über welche das Widgetelement mittels eines zweiten Endgeräts auswählbar ist.

Darüber hinaus wird ein Verfahren zum Bereitstellen einer anpassbaren Portalseite an einem ersten Endgerät eines Nutzers vorgeschlagen, wobei die Portalseite wenigstens ein ausgewähltes Widgetelement zum Anzeigen von Informationen und/oder Zugreifen auf einen webbasierten Dienst beinhaltet, welches eine grafische Darstellung bereitstellt, die ein Bestandteil einer Darstellung der Portalseite an einer Anzeigeeinrichtung des ersten Endgeräts ist. Die Portalseite wird von einer Servereinrichtung an dem ersten Endgerät verfügbar gemacht, und die Servereinrichtung stellt eine Schnittstelle bereit, über welche das Widgetelement mittels eines zweiten Endgeräts auswählbar ist.

Die Erfindung beinhaltet die Idee, eine Schnittstelle bereitzustellen, über die eine von einer Servereinrichtung für ein erstes Endgerät bereitgestellte Portalseite mittels eines zweiten Endgeräts konfiguriert werden kann. Dabei können mittels des zweiten Endgeräts Widgetelemente ausgewählt werden, die in die Portalseite eingebettet werden.

Dies ermöglicht eine komfortable Konfiguration der Portalseite mittels des zweiten Endgeräts, insbesondere dann, wenn es sich bei dem ersten Endgerät um ein mobiles Kommunikationsendgerät handelt. Dessen Bedienung ist in der Regel aufgrund einer relativ kleinen Bedieneinrichtung und/oder einer relativ kleinen Anzeigeeinrichtung weniger komfortabel. Bei dem zweiten Endgerät kann es sich beispielsweise um einen Personal Computer (PC) handeln. Dieser kann etwa über ein Kommunikationsnetzwerk, insbesondere das Internet, mit der Servereinrichtung verbunden sein.

Eine Ausgestaltung des Systems und des Verfahrens sieht vor, dass die Schnittstelle eine an einer Anzeigeeinrichtung des zweiten Endgeräts darstellbare grafische Benutzeroberfläche umfasst, und dass die grafische Benutzeroberfläche einen Simulationsbereich aufweist, in dem eine Darstellung der Portalseite an der Anzeigeeinrichtung des ersten Endgeräts simuliert werden kann.

Hierdurch wird eine besonders komfortable Konfiguration der Portalseite ermöglicht, da der Nutzer während der Konfiguration der Portalseite mittels der grafischen Benutzeroberfläche beurteilen kann, wie die Portalseite an der Anzeigeeinrichtung des ersten Endgeräts dargestellt wird.

Eine weitere Ausgestaltung des Systems und des Verfahrens beinhaltet, dass die grafische Benutzerschnittstelle wenigstens einen Auswahlbereich umfasst, in dem von auswählbaren Widgetelementen bereitgestellte grafische Darstellungen anzeigbar sind, und dass eine von einem auswählbaren Widgetelement bereitgestellte Darstellung mittels einer Eingabeeinrichtung des zweiten Endgeräts von dem Auswahlbereich in den Simulationsbereich bewegt werden kann, um das Widgetelement auszuwählen.

Eine derartige Auswahl von Widgetelementen wird üblicherweise auch als "Drag&Drop" bezeichnet und ist von dem Nutzer besonders komfortabel sowie einfach und intuitiv auszuführen.

Um die in dem Simulationsbereich angezeigte Darstellung der Portalseite jeweils an eine von dem Nutzer vorgenommene Auswahl von Widgetelementen anzupassen, ist bei einer Ausführungsform des System vorgesehen, dass der Simulationsbereich aufgrund der Auswahl des Widgetelements derart aktualisierbar ist, dass die simulierte Darstellung der Portalseite die von dem ausgewählten Widgetelement bereitgestellte grafische Darstellung umfasst.

Darüber hinaus zeichnet sich eine Weiterbildung des Systems und des Verfahrens dadurch aus, dass die Portalseite eine Funktionalität umfasst, um einen Inhalt der Portalseite während ihrer Darstellung an der Anzeigeeinrichtung des ersten Endgeräts durch eine Abfrage der Servereinrichtung derart zu aktualisieren, dass sie die momentan ausgewählten Widgetelemente beinhaltet.

Vorteilhaft wird bei dieser Weiterbildung auch die Darstellung der Portalseite an der Anzeigeeinrichtung des ersten Endgeräts aktualisiert, wenn der Nutzer ein Widgetelement ausgewählt hat. Die Abfrage wird vorzugsweise von dem ersten Endgerät an die Servereinrichtung gesendet, wobei die in der Portalseite enthaltene Funktionalität das Absenden der Anfrage steuert.

Eine verbundene Ausgestaltung des Systems ist dadurch gekennzeichnet, dass die Funktionalität der Portalseite eine regelmäßige Abfrage von Aktualisierungsdaten der Portalseite von der Servereinrichtung steuert.

Vorzugsweise umfassen die Aktualisierungsdaten von dem Nutzer ausgewählte Widgetelemente, die noch nicht in der Portalseite beinhaltet sind, so dass die von diesen Widgetelementen bereitgestellten Darstellungen nach der Auswahl innerhalb der Portalseite an der Anzeigeeinrichtung des ersten Endgeräts dargestellt werden können.

Insbesondere, wenn es sich bei dem ersten Endgerät um ein mobiles Kommunikationsendgerät handelt, ist die Anzeigeeinrichtung des ersten Endgeräts in der Regel relativ klein, wobei sich die Größe der Anzeigeeinrichtung je nach Gerätetyp des ersten Endgeräts unterscheidet. Um möglichst viele Informationen übersichtlich auf der Portalseite darstellen zu können, ist es vorteilhaft, die Darstellung an die Anzeigeeinrichtung anzupassen.

Daher sieht eine Ausführungsform des Systems und des Verfahrens eine Darstellungseinheit vor, die dazu ausgebildet ist, die von einem Widgetelement bereitgestellte grafische Darstellung an die Anzeigeeinrichtung des ersten Endgeräts anzupassen.

Eine verbundene Ausgestaltung sieht vor, dass von dem ersten Endgerät eine Gerätetypkennung an die Servereinrichtung übermittelbar ist und wobei die Darstellungseinheit die grafische Darstellung in Abhängigkeit von der empfangenen Gerätetypkennung anpasst.

Innerhalb des Simulationsbereichs und innerhalb des Auswahlbereichs der grafischen Benutzeroberfläche werden die von den Widgetelementen bereitgestellten grafischen Darstellungen vorzugsweise so angezeigt, wie an der Anzeigeeinrichtung des ersten Endgeräts, um dem Nutzer innerhalb der grafischen Benutzeroberfläche einen besseren Eindruck von der zu konfigurierenden Portalseite zu geben.

Aus diesem Grund sieht eine Ausführungsform des Systems und des Verfahrens vor, dass die in dem Simulationsbereich und/oder in dem Auswahlbereich der grafischen Benutzeroberfläche anzeigbare, von einem Widgetelement bereitgestellte grafische Darstellung mittels der Darstellungseinheit an die Anzeigeeinrichtung des ersten Endgeräts anpassbar ist.

Die von einem Widgetelementen bereitgestellte grafische Darstellung kann beispielsweise Informationen umfassen, die von einer Informationsquelle bereitgestellt werden. Die Informationen können beispielsweise Nachrichten einer vorgegebenen Zusammenstellung oder ähnliche Inhalte umfassen.

Bei einer Ausgestaltung des Systems und des Verfahrens ist vorgesehen, dass die von einem Widgetelement bereitgestellte grafische Darstellung Informationen umfasst, welche mittels der Servereinrichtung von einer Informationsquelle abrufbar und in der Servereinrichtung speicherbar sind.

Vorteilhaft wird die Servereinrichtung in dieser Ausgestaltung als ein sogenannter Proxyserver betrieben, über den die Informationen von der Informationsquelle abgerufen werden. Hierdurch wird insbesondere erreicht, dass die Informationen auch dann zur Verfügung stehen, wenn die Informationsquelle etwa temporär nicht verfügbar ist. Ferner können die Funktionalitäten zum Abrufen der Informationen von der Informationsquelle in die Servereinrichtung integriert werden.

Eine verbundene Ausführungsform des Systems und des Verfahrens beinhaltet, dass das Widgetelement eine Funktionalität umfasst, um die aktualisierten Informationen von der Servereinrichtung abzurufen und in die grafische Darstellung zu integrieren, während die Portalseite an der Anzeigeeinrichtung des ersten Endgeräts angezeigt wird.

Hierdurch können dynamisch veränderliche Informationen mittels eines Widgetelements innerhalb der Portalseite angezeigt werden, so dass der Nutzer stets über aktuelle Informationen verfügt.

Ferner zeichnet sich eine Weiterbildung des Systems und des Verfahrens dadurch aus, dass die grafische Benutzerschnittstelle derart ausgestaltet ist, dass die aktualisierten Informationen in die von dem Widgetelement bereitgestellte grafische Darstellung innerhalb des Simulationsbereichs und/oder innerhalb des Auswahlbereichs integrierbar sind, während die von dem Widgetelement bereitgestellte grafische Darstellung innerhalb der Portalseite in dem Simulationsbereich und/oder innerhalb des Auswahlbereichs angezeigt wird.

Hierdurch wird erreicht, dass die grafische Darstellung der Widgetelemente, die innerhalb der grafischen Benutzeroberfläche angezeigt wird, auch im Hinblick auf dynamisch veränderliche Inhalte der Darstellung an der Anzeigeeinrichtung des ersten Endgeräts entspricht.

Es sind Anzeigeeinrichtungen für Endgeräte bekannt, die als so genannte Sensorbildschirme oder Touchscreens ausgestaltet sind. Bei diesen Anzeigeeinrichtungen kann der Nutzer durch Druck auf die Anzeigeeinrichtung Bedienelemente betätigen, die von Webseiten, wie beispielsweise der zuvor beschriebenen Portalseite, bereitgestellt werden. Sofern jedoch mehrere Bedienelemente in einem geringen Abstand zueinander dargestellt werden und/oder die Darstellung der Bedienelemente klein ist, besteht die Gefahr, dass der Nutzer die Bedienelemente gleichzeitig betätigt.

Bei Anzeigeeinrichtungen, die keine Sensorfunktionalität aufweisen, besteht diese Gefahr in der Regel nicht, da der Nutzer hier üblicherweise einen Zeiger mittels einer Eingabeeinrichtung des Endgeräts bewegt, um die Bedienelemente zu betätigen, und die Zeigergröße an die Größe der Bedienelemente und deren Abstand angepasst ist.

Es ist daher wünschenswert, die Darstellung von Bedienelementen einer Webseite an einer Anzeigeeinrichtung eines Endgeräts möglichst optimal an die Anzeigeeinrichtung anzupassen.

Daher wird gemäß einem weiteren Aspekt der Erfindung ein Verfahren zum Bereitstellen einer eine Darstellung mehrerer Bedienelemente umfassenden Webseite an einer Anzeigeeinrichtung eines Endgerätes vorgeschlagen, bei dem eine die Anzeigeeinrichtung spezifizierende Kennung erfasst wird, und eine Größe der Darstellung der Bedienelemente und/oder ein Abstand zwischen den Darstellungen der Bedienelemente innerhalb der Webseite in Abhängigkeit von der erfassten Kennung festgelegt wird.

Zudem wird eine Darstellungseinrichtung zum Bereitstellen einer eine Darstellung mehrerer Bedienelemente umfassenden Webseite an einer Anzeigeeinrichtung eines mit der Darstellungseinrichtung verbundenen Endgeräts vorgeschlagen, wobei die Darstellungseinrichtung dazu ausgestaltet ist, eine die Anzeigeeinrichtung spezifizierende Kennung zu erfassen und eine Größe der Darstellung der Bedienelemente und/oder einen Abstand zwischen den Darstellungen der Bedienelementen innerhalb der Webseite in Abhängigkeit von der erfassten Kennung zu bestimmen.

Die Darstellungseinrichtung kann mit dem Endgerät insbesondere über ein Kommunikationsnetzwerk, wie beispielsweise das Internet, verbunden sein. Bei der Darstellungseinheit kann es sich um die Darstellungseinheit des zuvor beschriebenen Systems handeln. Gleichfalls kann die Darstellungseinheit jedoch auch unabhängig von dem System eingesetzt werden.

Eine Ausgestaltung des Verfahrens und der Darstellungseinrichtung sieht vor, dass die Größe der Darstellung der Bedienelemente und/oder der Abstand zwischen den Darstellungen der Bedienelemente in einem Profil spezifiziert werden, das der Kennung zugeordnet ist.

Innerhalb der Portalseite können Informationen einer bestimmten Zusammenstellung angezeigt werden, die von der Servereinrichtung von einer Informationsquelle abgerufen werden. Die Zusammenstellung kann dabei beispielsweise Nachrichten bezüglich des Tagesgeschehens, Börsennachrichten oder dergleichen umfassen. Die Informationsquelle aktualisiert die Informationen bedarfsgerecht. Dies bedeutet, dass die Informationen immer dann von der Informationsquelle aktualisiert werden, wenn ein mit der Zusammenstellung in Verbindung stehendes Geschehnis dies erforderlich macht.

Dabei wird gemäß einem weiteren Aspekt der Erfindung ein Verfahren zum Bereitstellen von sich verändernden Informationen, die von einer Informationsquelle erhalten werden, innerhalb einer an einem Endgerät darstellbaren Webseite, vorgeschlagen, bei dem die Informationen von der Informationsquelle in vorgegebenen Zeitabständen abgerufen und in einer mit dem Endgerät verbindbaren Servereinrichtung gespeichert werden, und ein Widgetelement in die Webseite eingebracht wird, welches dazu ausgestaltet ist, die Informationen von der Servereinrichtung abzurufen.

Ferner wird eine Servereinrichtung zum Bereitstellen von sich verändernden Informationen, die von einer Informationsquelle erhalten werden, innerhalb einer an einem Endgerät darstellbaren Webseite, geschaffen. Die Servereinrichtung umfasst eine Leseeinrichtung, die dazu ausgestaltet ist, Informationen von der Informationsquelle in vorgegebenen Zeitabständen abzurufen und die abgerufenen Informationen zu speichern, und ein Mittel zum Erzeugen der Webseite, das dazu ausgebildet ist, ein Widgetelement in die Webseite zu integrieren, welches dazu ausgestaltet ist, die Informationen von der Servereinrichtung abzurufen.

Das Verfahren und die Servereinrichtung weisen den Vorteil auf, dass das Widgetelement die Informationen nicht unmittelbar von der Informationsquelle, sondern von einer zwischengeschalteten Servereinrichtung abruft. Hierdurch kann insbesondere sichergestellt werden, dass auf der Webseite auch dann Informationen bereitgestellt werden können, wenn die Informationsquelle selbst temporär nicht verfügbar ist.

Je nach Zusammenstellung werden die Informationen in der Regel mit einer unterschiedlichen Häufigkeit aktualisiert. So ist die Aktualisierungsrate etwa bei Börsennachrichten in der Regel relativ hoch, während sie bei Zusammenstellungen mit Informationen aus anderen Gebieten wesentlich geringer sein kann.

Daher ist bei einer Ausgestaltung des Verfahrens und der Servereinrichtung vorgesehen, dass die von der Informationsquelle abgerufenen Informationen mit den in der Servereinrichtung gespeicherten Informationen verglichen werden, und ein Zeitabstand bis zum nächsten Abruf der Informationen von der Informationsquelle vergrößert wird, wenn die abgerufenen Informationen und die gespeicherten Informationen übereinstimmen.

Eine verbundene Ausgestaltung des Verfahrens und der Servereinrichtung zeichnet sich dadurch aus, dass der Zeitabstand um einen vorgegebenen ersten Betrag vergrößert wird.

Die zuvor beschriebenen Ausgestaltungen haben den Vorteil, dass die Häufigkeit der von der Servereinrichtung an die Informationsquelle gesendeten Anforderungen zum Abrufen aktualisierter Informationen an die Aktualisierungsrate der Zusammenstellung angepasst werden kann, insbesondere verringert werden kann, wenn sich die Informationen bei zwei aufeinanderfolgenden Abrufen nicht verändert haben. Hierdurch wird der Datenverkehr zum Abrufen der Informationsquelle reduziert und bedarfsgerecht angepasst. Die Anpassung wird dabei automatisch vorgenommen, wodurch der Komfort für den Nutzer gesteigert wird.

Ferner beinhaltet eine Ausführungsform des Verfahrens und der Servereinrichtung, dass die von der Informationsquelle abgerufenen Informationen mit den in der Servereinrichtung gespeicherten Informationen verglichen werden, und ein Zeitabstand bis zum nächsten Abruf der Informationen von der Informationsquelle verringert wird, wenn sich die abgerufenen Informationen von den gespeicherten Informationen unterscheiden.

Eine verbundene Ausführungsform des Verfahrens und dessen Einrichtung sieht vor, dass der Zeitabstand um einen vorgegebenen zweiten Betrag verringert wird.

Bei den zuvor beschriebenen Ausgestaltungen ist ebenfalls eine bedarfsgerechte Anpassung der Zeitabstände zwischen den Anfragen der Informationsquelle vorgesehen. Diese dienen dazu, die Zeitabstände zwischen den Anfragen zu verringern, wenn sich die Informationen bei zwei aufeinanderfolgenden Abrufen verändert haben. Hierdurch wird erreicht, dass die Informationen bei häufigen Aktualisierungen ausreichend oft abgefragt werden.

Bei einer weiteren Ausführungsform des Verfahrens und der Servereinrichtung ist es vorgesehen, dass innerhalb eines vorgegebenen Zeitraums Informationen mit einer vorgegebenen Frequenz abgerufen und mit zuvor abgerufenen Informationen verglichen werden, um Aktualisierungsintervalle zu ermitteln, innerhalb derer sich die Informationen verändert haben, und wobei der vorgegebene Zeitabstand nach Maßgabe der Aktualisierungsintervalle ermittelt wird.

Vorteilhaft werden die Zeitabstände bei dieser Ausführungsform anhand der innerhalb eines vorgegebenen Zeitraums erfassten Aktualisierungen bestimmt. Der Zeitabstand zwischen zwei Abfragen der Informationsquelle kann dabei insbesondere als Mittelwert oder Minimalwert der Aktualisierungsintervalle ermittelt werden.

Eine Weiterbildung des Verfahrens und des Servereinrichtung beinhaltet, dass das Widgetelement die Informationen von der Servereinrichtung in vorgegebenen Zeitabständen abruft, die an die Zeitabstände zwischen den eine beispielhafte Veranschaulichung der Darstellung einer personalisierten Portalseite an einem Endgerät eines Nutzers in einer ersten Ausgestaltung Abfragen der Informationsquelle angepasst sind.

Vorteilhaft kann durch die Anpassung der Zeitabstände, in denen das Widgetelement Informationen von der Servereinrichtung abruft, an die Zeitabstände der Abfragen der Informationsquelle eine bedarfsgerechte Kommunikation zwischen dem Widgetelement unter Servereinrichtung erreicht werden. Hierdurch kann der für die Kommunikation zwischen dem Widgetelement und der Servereinrichtung erforderliche Datenverkehr verringert werden.

Eine Ausführungsform des Verfahrens und der Servereinrichtung beinhaltet, dass von der Servereinrichtung eine Vorgabe für einen Zeitpunkt, in dem das Widgetelement die Informationen von der Servereinrichtung ruft, bereitgestellt wird.

Des Weiteren zeichnet sich eine Ausführungsform des Verfahrens und der Servereinrichtung dadurch aus, dass die Vorgabe derart bestimmt wird, dass der Zeitpunkt, in dem das Widgetelement die Informationen von der Servereinrichtung abruft, einen vorgegebenen zeitlichen Abstand zu dem Zeitpunkt hat, in dem Informationen von der Informationsquelle abgerufen werden.

Vorteilhaft kann hierdurch eine Synchronisierung zwischen den Abfragen der Informationsquelle und dem Abrufen der Informationen von der Servereinrichtung erreicht werden, die zu einer Minimierung des Datenverkehrs zwischen dem Widgetelement bzw. dem Endgerät und der Servereinrichtung beiträgt.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

### Kurze Beschreibung der Figuren

Von den Figuren zeigt:
- Fig. 1: eine schematische Darstellung eines Systems zum Darstellen und Konfigurieren einer Portalseite nach der Erfindung,
- Fig. 2: eine beispielhafte Veranschaulichung der Darstellung einer personalisierten Portalseite an einem Endgerät eines Nutzers in einer ersten Ausgestaltung,
- Fig. 3: eine beispielhafte Veranschaulichung der Darstellung einer personalisierten Portalseite an einem Endgerät eines Nutzers in einer zweiten Ausgestaltung,
- Fig. 4: eine beispielhafte Veranschaulichung einer grafischen Benutzeroberfläche zur Konfiguration einer personalisierten Portalseite,
- Fig. 5: eine beispielhafte Veranschaulichung eines Fensters eines Konfigurationswidgetelements und
- Fig. 6: eine beispielhafte Veranschaulichung der Darstellung von Ergebnissen einer Suche nach Zusammenstellungen mittels des Konfigurationswidgetelements.

### Darstellung von Ausführungsbeispielen

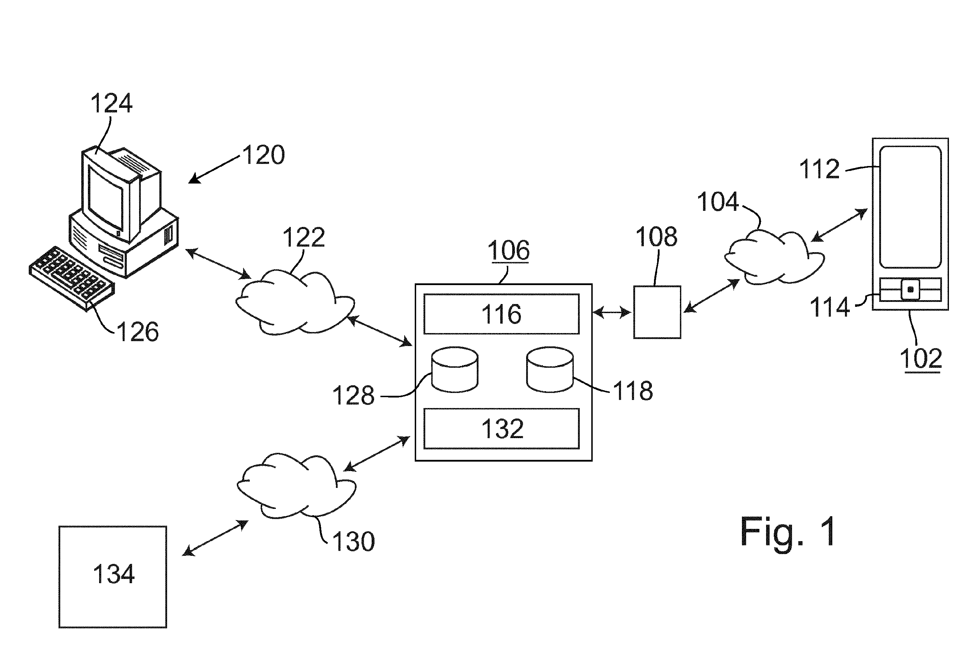

In Figur 1 ist in schematischer Darstellung ein Endgerät 102 dargestellt, das über ein Kommunikationsnetzwerk 104 auf einen Portalserver 106 zugreifen kann. Bei dem Endgerät 102 handelt es sich beispielsweise um ein mobiles Kommunikationsgerät, insbesondere ein Mobiltelefon, einen PDA (Personal Data Assistent) oder dergleichen. Das Kommunikationsnetzwerk 104 ist in einer Ausgestaltung ein Mobilfunknetzwerk, mit dem das Endgerät 102 über ein Zugangsnetzwerk drahtlos verbunden ist.

Die Kommunikation zwischen dem Endgerät 102 und dem Portalserver 106 erfolgt in der dargestellten Ausgestaltung WAP-basiert (WAP: Wireless Application Protocol). Hierzu ist der Portalserver 106 mit einem WAP-Gateway 108 verbunden, der seinerseits über das Kommunikationsnetzwerk 104 mit dem Endgerät 102 verbunden ist. Das WAP-Gateway 108 übersetzt von dem Endgerät 102 empfangene Anforderungen in ein von den Portalserver 106 nutzbares Format und kompiliert von dem Portalserver 106 an das Endgerät 102 gesendete Daten in ein Format, welches innerhalb des Endgeräts 102 nutzbar ist. Die Kommunikation zwischen dem Gateway 108 und dem Portalserver 106 erfolgt beispielsweise über ein in der Figur nicht dargestelltes Netzwerk auf der Grundlage eines dem Fachmann an sich bekannten Protokolls, wie beispielsweise dem Hypertext Transfer Protocol (HTTP). Zwischen dem Gateway 108 und dem Endgerät 102 werden Daten über einen von dem Kommunikationsnetzwerk 104 bereitgestellten Datenübertragungsdienst überträgt. Falls es sich bei dem Kommunikationsnetzwerk um ein Mobilfunknetzwerk handelt, können Datenübertragungsdienste wie etwa HSDPA (High Speed Downlink Packet Access), GPRS (General Packet Radio Service), CSD (Circuit Switched Data), HSCSD (High Speed Circuit Switched Data) oder dergleichen genutzt werden.

Von dem Portalserver 106 bereitgestellte Daten umfassen Webseiten, die beispielsweise in einem XHTML-Format (XHTML: Extensible Hypertext Markup Language) ausgeführt sind, das üblicherweise innerhalb des WAP-Standards verwendet wird. Zur Darstellung von Webseiten umfasst das Endgerät 102 eine Browsereinrichtung, die vorzugsweise als eine Softwareanwendung ausgestaltet ist, die auf einem Prozessor des Endgeräts ausgeführt wird. Mittels der Browsereinrichtung werden die Webseiten auf einer Anzeigeeinrichtung 112 des Endgeräts 102 dargestellt und bieten die Möglichkeit der Nutzerinteraktion. Insbesondere umfassen die Webseiten Elemente, die von dem Nutzer des Endgeräts 102 betätigt werden können oder Nutzereingaben empfangen können. Dabei kann das Endgerät 102 eine Eingabeeinrichtung 114 umfassen, über die der Nutzer die Elemente anwählen und betätigen kann bzw. Eingaben tätigen kann. Gleichfalls kann die Anzeigeeinrichtung 112 als ein Touchscreen ausgestaltet sein. Hierbei handelt es sich um einen Sensorbildschirm, bei dem die Betätigung eines Elements dadurch erfolgt, dass der Nutzer den Bildschirm an der Stelle berührt, an der das Element dargestellt wird.

Eine der von dem Portalserver 104 bereitgestellten Webseiten ist eine für den Nutzer des mobilen Endgeräts 102 personalisierte Portalseite. Die Portalseite umfasst Widgetelemente zur Anzeige von ausgewählten Inhalten und/oder Widgetelemente, die eine Interaktion des Nutzers mit vorgegebenen Diensten ermöglichen. Ein Widgetelement ist ein in die Portalseite eingebettetes Element, welches eine Darstellung vorgegebener Inhalte innerhalb der Portalseite erzeugt. Die von einem Widgetelement bereitgestellte Darstellung kann statisch sein oder dynamisch veränderlich, während die Portalseite an der Anzeigeeinrichtung 112 des Endgeräts 102 angezeigt wird. Widgetelemente entsprechen Programmen innerhalb der Portalseite, die in HTML (Hypertext Markup Langhage) oder in einer Skriptsprache wie beispielsweise JavaScript, Flash oder dergleichen geschrieben sein können und mittels der Browsereinrichtung ausgeführt werden, während die Portalseite angezeigt wird.

Die mittels eines Widgetelements dargestellten Informationen können von dem Portalserver 106 mittels einer Leseeinrichtung 132 über ein Datennetzwerk 130, vorzugsweise das Internet, von einer Informationsquelle 134 oder mehreren Informationsquellen abgerufen werden. Die Informationen können Text, Bilder und weitere Multimediainhalte umfassen. Die dargestellten Inhalte können in einer Ausgestaltung zudem mit Links versehen sein, bei deren Betätigung eine weitere Webseite in einer dem Fachmann bekannten Weise angefordert und an der Anzeigeeinrichtung 112 des Endgeräts 102 zur Anzeige gebracht wird.

Darüber hinaus werden die dargestellten Informationen in einer Ausgestaltung fortlaufend, insbesondere während der Darstellung der Portalseite an der Anzeigeeinrichtung 112, aktualisiert. Dabei werden von der Informationsquelle 134 bei Bedarf aktualisierte Informationen bereitgestellt, die von der Leseeinrichtung 132 abgerufen werden. Um die an dem Endgerät 102 dargestellte Portalseite ebenfalls zu aktualisieren, umfassen die Widgetelemente zur Anzeige sich verändernder Informationen eine Funktionalität, um die aktualisierten Informationen von dem Portalserver 106 abzurufen. In einer Ausgestaltung wird diese Funktionalität durch eine in dem Widgetelement enthaltene Applikation implementiert, die in vorgegebenen Zeitabständen Aktualisierungsanforderungen erzeugt, die von dem Endgerät 102 an den Portalserver 106 gesendet werden. Sofern aktualisierte Informationen vorliegen, beantwortet der Portalserver 106 eine solche Aktualisierungsanforderung mit der Übermittelung der aktualisierten Informationen. Bei Empfang der aktualisierten Informationen ersetzt die Applikation vorhandene Inhalte durch die aktualisierten Informationen. Ein derartige Applikation kann dabei beispielsweise auf der dem Fachmann an sich bekannten AJAX-Technologie basieren (AJAX: Asynchronous Java Script and XML, XML: Extensible Markup Language).

Insbesondere können Widgetelemente der zuvor beschriebenen Art dazu verwendet werden, um aktuelle Nachrichten anzuzeigen, die in einer vorgegebenen Zusammenstellung von der Informationsquelle 134 bereitgestellt werden. Bei einer derartigen Zusammenstellung kann es sich in einer Ausgestaltung um einen dem Fachmann an sich bekannten RSS-Feed handeln. Die Abkürzung RSS steht in den RSS-Versionen 0.9x für Rich Site Summary, in den RSS-Versionen 0.9 und 1.0 für RDF Site Summary und seit der RSS-Version 2.0 für Really Simple Syndication. Die RSS-Technologie sieht vor, dass die Informationen in einem vorgegebenen Format, wie beispielsweise XML, bereitgestellt werden. Verschiedene Zusammenstellungen können beispielsweise das Tagesgeschehen betreffende Nachrichten, Börsennachrichten, oder Nachrichten aus einem den Nutzer interessierenden Gebiet beinhalten. Bei den mittels der Widgetelemente dargestellten Informationen kann es sich insbesondere um Schlagzeilen handeln, die mit Links versehen sein können, bei deren Betätigung Webseiten mit weiterführenden Informationen aufgerufen werden.

Ferner können beispielsweise Widgetelemente vorgesehen sein, mit denen ein Wetterbericht für eine von dem Nutzer spezifizierte Region, Werbe- und Kontaktanzeigen oder dergleichen, innerhalb der personalisierten Portalseite angezeigt werden können.

Darüber hinaus kann die Portalseite Widgetelemente beinhalten, die dem Nutzer eine Interaktion mit einem Internetdienst ermöglichen. Derartige Widgetelemente können beispielsweise Eingaben empfangen, die der Nutzer mithilfe der Eingabeeinrichtung 114 des Endgeräts 102 getätigt hat, und diese an einen vorgegebenen Server übermitteln. So kann ein Widgetelement etwa die Eingabe eines Suchbegriffs ermöglichen, um mithilfe einer Internetsuchmaschine eine entsprechende Suche durchführen zu können. Die Eingabe wird dabei in einer dem Fachmann grundsätzlich bekannten Weise an die Internetsuchmaschine geleitet, welche das Ergebnis der Suche an das Endgerät übermittelt. Zum Empfangen der Eingabe stellen derartige Widgetelemente vorzugsweise eine Eingabemaske bereit, die innerhalb der Portalseite angezeigt und von dem Nutzer mittels der Eingabeeinrichtung 114 ausgefüllt werden kann.

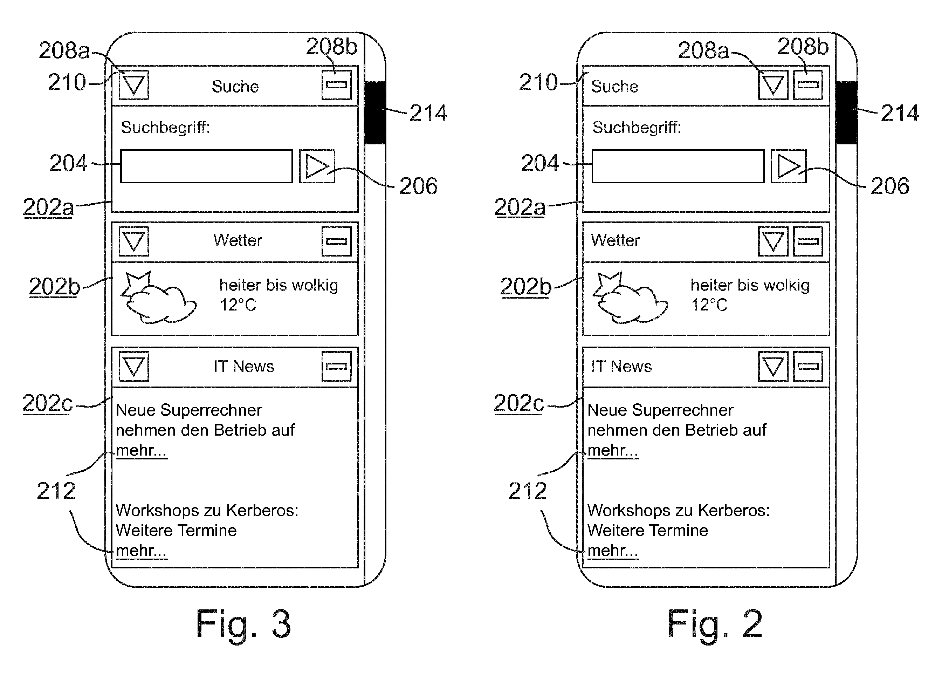

In Figur 2 ist beispielhaft eine personalisierte Portalseite dargestellt, wie sie auf der Anzeigeeinrichtung des mobilen Endgeräts 102 dargestellt werden kann. Jedes Widgetelement stellt innerhalb der dargestellten Portalseite ein Fenster 202a,b,c bereit, in dem die von dem Widgetelement bereitgestellten Inhalte angezeigt werden. In der beispielhaften Darstellung in Figur 2 handelt es sich bei dem Fenster 202a, um ein Fenster zur Eingabe eines Suchbegriffs in eine Eingabemaske 204. Aufgrund der Betätigung eines Aktivierungselements 206 kann die Eingabe an einen Suchdienst übergeben werden. Das Fenster 202b umfasst beispielhaft die Darstellung eines Wetterberichts, und in dem Fenster 202c werden Nachrichtenschlagzeilen angezeigt, die jeweils mit einem Link 212 versehen sind, um weitere Informationen aufzurufen.

Die Fenster 202a,b,c umfassen Bedienelemente 208a,b, die beispielsweise in einer Titelleiste 210 angeordnet sein können. Die Titelleiste 210 kann zudem einen Titel des Widgetelements enthalten, um das Widgetelement für den Nutzer zu identifizieren. Die Bedienelemente 208a,b können von dem Nutzer mittels der Eingabeeinrichtung 114 betätigt werden und ermöglichen ihm eine Kontrolle über die von dem Widgetelement bereitgestellte Darstellung. Ein Bedienelemente 208a ermöglicht es beispielsweise, das einem Widgetelement zugeordneten Fenster 202a,b,c auszublenden und ein ausgeblendetes Fenster 202a,b,c wieder einzublenden. Wird ein Fenster 202a,b,c ausgeblendet, dann wird vorzugsweise lediglich die Titelleiste 210 des Fensters 202a,b,c innerhalb der Portalseite dargestellt. Ein weiteres Bedienelement 208b erlaubt es beispielsweise, das entsprechende Widgetelement aus der Portalseite zu löschen, wenn der Nutzer dies wünscht.

Darüber hinaus kann es vorgesehen sein, dass der Nutzer die Fenster 202a,b,c mittels der Eingabeeinrichtung 114 auf der Portalseite verschieben kann. Hierdurch kann der Nutzer die Reihenfolge verändern, in der die Fenster 202a,b,c innerhalb der Portalseite dargestellt werden.

In einer Ausgestaltung wird die Portalseite an der Anzeigeeinrichtung 112 nur ausschnittsweise dargestellt. Die Anzahl der auswählbaren Widgetelemente kann damit die Anzahl der gleichzeitig an der Anzeigeeinrichtung darstellbaren Fenster 202a,b,c überschreiten. In einem Ausschnitt nicht dargestellte Fenster können durch ein Scrollen der Portalseite durch Betätigung eines Scrollbalkens 214 zur Anzeige gebracht werden, der in der dargestellten Ausführungsform am Rand der Portalseite angeordnet ist.

Entsprechend dem Gerätetyp unterscheiden sich die Anzeigeeinrichtungen 112 von Endgeräten 102 verschiedener Typen beispielsweise im Hinblick auf ihre Abmessungen, ihre Auflösung sowie die Anzahl der darstellbaren Farben. Ferner haben die Anzeigeeinrichtungen 112 von Kommunikationsgeräten 102 in der Regel relativ kleine Abmessungen. Deshalb ist es vorgesehen, die Darstellung der Portalseite an die Anzeigeeinrichtung 112 des von dem Nutzer verwendeten Endgeräts 102 anzupassen.

Hierzu ist eine in dem Portalserver 106 enthaltene Darstellungseinheit 116 vorgesehen, die mit einer Profildatenbank 118 verbunden ist. In der Profildatenbank 118 ist für verschiedene Typen von Endgeräten 102 jeweils ein Darstellungsprofil gespeichert, das Regeln enthält, nach denen die Darstellungseinheit 116 die Anpassung der Portalseite an die Anzeigeeinrichtung 112 des entsprechenden Endgeräts 102 vornimmt. Entsprechend dieser Regeln passt die Darstellungseinheit 116 insbesondere die Breite der Fenster 202a,b,c der in der personalisierten Portalseite enthaltenen Widgetelemente an sowie die Schriftgröße in den Fenstern 202a,b,c darzustellendem Text. Ferner werden die Größe und gegebenenfalls weitere Parameter den in den Fenstern 202a,b,c darzustellenden Bildern und anderen Multimediainhalten angepasst.

In einer Ausgestaltung wird darüber hinaus danach unterschieden, ob es sich bei der Anzeigeeinrichtung 112 um einen Sensorbildschirm oder einen gewöhnlichen Bildschirm handelt. Bei Sensorbildschirmen besteht häufig das Problem, dass Bedienelemente 208a,b in einem relativ geringen Abstand zueinander dargestellt werden, so dass die Gefahr besteht, dass der Nutzer mehrere Bedienelemente 208a,b gleichzeitig betätigt. Bei Bildschirmen ohne Sensorfunktionalität bewegt der Nutzer in der Regel einen Zeiger mit einer an die Bedienelemente 208a,b angepassten Größe mithilfe der Eingabeeinrichtung 114 des Endgeräts 102 zu einem Bedienelement 208a,b, welches mittels der Eingabeeinrichtung 114 betätigt werden kann, wenn es von dem Zeiger berührt wird. Hierbei erhöht ein geringer Abstand zwischen den Bedienelementen 208a,b den Komfort für den Nutzer, da er den Zeiger weniger weit bewegen muss, um zwischen den Bedienelementen 208a,b zu wechseln.

Ähnliche Überlegungen gelten in Bezug auf die Größe der Darstellung der Bedienelemente. Größere Bedienelemente vereinfachen die Bedienung an einem Sensorbildschirm, während kleinere Bedienelemente den Vorteil haben, dass auf der Anzeigefläche des Bildschirms ein größerer Bereich für die Darstellung weiterer Inhalte zur Verfügung steht.

In der Profildatenbank 118 gespeicherte Regeln für die Anpassung der Portalseite an eine als Sensorbildschirm ausgestaltete Anzeigeeinrichtung 112, können daher einen größeren Abstand zwischen den Bedienelementen 208a,b vorsehen, als Regeln für die Anpassung der Portalseite an eine als gewöhnliches Display ausgestaltete Anzeigeeinrichtung 112 ohne Sensorfunktion. Der Abstand zwischen den Bedienelementen 208a,b bei einem Sensorbildschirm 112 wird vorzugsweise so groß gewählt, dass der Nutzer bei der Betätigung eines Bedienelements kein anderes Bedienelement gleichzeitig betätigt. Insbesondere ist der Abstand vorzugsweise größer als die Ausdehnung der Spitze typischer Mittel, mit denen der Nutzer den Sensorbildschirm betätigt, wie beispielsweise Stiften oder seinen Fingern.

Sofern, wie zuvor beschrieben, zwei Bedienelemente 208a,b in einer Titelleiste 210 der Fenster vorgesehen sind, wird beispielsweise ein Bedienelement 208a am linken und das andere Bedienelement 208b am rechten Rand der Titelleiste 210 angeordnet, wie es in Figur 3 für die bereits in Figur 2 veranschaulichte Portalseite dargestellt ist. Selbstverständlich sind jedoch auch andere Anordnungen der Bedienelemente 208a,b möglich, bei denen ein ausreichend großer Abstand besteht. Dabei brauchen die Bedienelemente 208a,b nicht in der Titelleiste 210 des Anzeigebereichs angeordnet sein, sondern können in anderer Weise über den Anzeigebereich 202a,b,c verteilt sein. So kann etwa bei mehr als zwei vorgesehenen Bedienelementen 208a,b eingerichtet sein, dass die Bedienelemente auch in der unteren linken und/oder rechten Ecken des Anzeigenbereichs angeordnet sind.

Wird die Portalseite hingegen an eine Anzeigeeinrichtung 112 ohne Sensorfunktion angepasst, dann wird vorzugsweise ein geringer Abstand zwischen den Bedienelementen 208a,b gewählt. Insbesondere werden die Bedienelemente im Wesentlichen in unmittelbarer Nähe angeordnet, beispielsweise am linken oder rechten Rand, wie es beispielhaft in Figur 2 veranschaulicht ist. Selbstverständlich sind auch bei Anzeigeeinrichtungen 112 ohne Sensorfunktion andere Anordnungen der Bedienelemente 208a,b innerhalb der Titelleiste 210 oder im übrigen Teil eines Anzeigenbereichs 202a,b,c möglich.

Darüber hinaus sehen die in der Profildatenbank 118 gespeicherten Regeln für die Anpassung der Portalseite an eine als Sensorbildschirm ausgestaltete Anzeigeeinrichtung 112 in einer Ausgestaltung größere Darstellungen der Bedienelemente vor, als für die Anpassung der Portalseite an eine als gewöhnliches Display ausgestaltete Anzeigeeinrichtung 112 ohne Sensorfunktion. Hierdurch wird die Bedienung der Bedienelemente an einem Sensorbildschirm vereinfacht, während bei Anzeigeeinrichtungen 112 ohne Sensorfunktion eine größere Fläche für die Darstellung von Inhalten verbleibt.

Der Gerätetyp des von dem Nutzer verwendeten Endgeräts 102 wird von der Darstellungseinheit 116 anhand von Informationen ermittelt, die von dem Endgerät 102 bei einer Anforderung der Portalseite an den Portalserver 106 gesendet werden. Dabei kann insbesondere vorgesehen sein, dass die Anforderung eine Angabe des Typs des Endgeräts 102 umfasst, die in der Darstellungseinheit 116 ausgewertet wird, um das Darstellungsprofil zu ermitteln, das dem Gerätetyp beziehungsweise der in dem Endgerät 102 enthaltenen Anzeigeeinrichtung 112 zugeordnet ist.

Die Anpassung der Widgetelemente durch die Darstellungseinheit 116 erfolgt vorzugsweise dann, wenn eine Anorderung der Portalseite von dem Endgerät 102 empfangen wird oder die grafische Benutzeroberfläche von dem Konfigurationsendgerät 120 angefordert wird. Dabei kann vorgesehen sein, dass die Darstellungseinheit vorkonfigurierte Widgetelemente anhand des maßgeblichen Darstellungsprofils anpasst, bevor sie in die Portalseite bzw. in die grafische Benutzeroberfläche integriert werden.

Die Widgetelemente der Portalseite werden von dem Nutzer aus einer Vielzahl von Widgetelementen ausgewählt, die von dem Portalserver 106 bereitgestellt werden. Jedem Widgetelement ist dabei eine Kennung zugeordnet, und die Kennungen der von dem Nutzer ausgewählten Widgetelemente werden in einer Portaldatenbank 128 unter einer Nutzerkennung hinterlegt. Ferner wird in der Portaldatenbank 128 die Reihenfolge gespeichert, in der die Fenster 202a,b,c der von dem Nutzer ausgewählten Widgetelemente in der Portalseite dargestellt werden. Bei der Nutzerkennung kann es sich beispielsweise um eine Mobile Subscriber Integrated Services Digital Network Number (MSISDN) handeln, die dem Nutzer innerhalb des Mobilfunknetzwerks 104 zugeordnet ist.

Die Nutzerkennung ist in der von dem Endgerät 102 an den Portalserver 106 übermittelten Anforderung der Portalseite enthalten. Bei einer Auswertung der Anforderungen liest der Portalserver 106 die Nutzerkennung, um anhand des zugeordneten Datenbankeintrags in der Portaldatenbank 128 die von dem Nutzer ausgewählten Widgetelemente zu ermitteln und in die Portalseite einzubringen.

Zur Konfiguration der Portalseite stellt der Portalserver 106 eine Schnittstelle bereit, die es dem Nutzer ermöglicht, Widgetelemente über ein Konfigurationsendgerät 120 auszuwählen, das über ein weiteres Datennetzwerk 122 mit dem Portalserver 106 verbunden ist. Die Schnittstelle ist in einer Ausführungsform als eine Webanwendung ausgestaltet, die eine grafische Benutzeroberfläche umfasst. Die grafische Benutzeroberfläche enthält die von dem Nutzer ausgewählten und die von dem Portalserver 106 zur Auswahl bereitgestellten Widgetelemente und kann beispielsweise als eine Webseite ausgeführt sein, welche mithilfe einer in den Konfigurationsendgerät 120 ausgeführten Browseranwendung an einer Anzeigeeinrichtung 124 des Konfigurationsendgeräts 120 angezeigt wird. Der Nutzer bedient die Webanwendung mittels einer Eingabeeinrichtung 126 des Konfigurationsendgeräts 120. Hierbei kann es sich beispielsweise um eine Tastatur oder eine Computermaus handeln, die eine besonders komfortable Bedienung der grafischen Benutzeroberfläche ermöglicht. Beim Aufrufen der grafischen Benutzeroberfläche von dem Konfigurationsendgerät 120 aus wird der Bediener des Konfigurationsendgeräts durch den Portalserver authentifiziert. Dies geschieht beispielsweise anhand der dem Endgerät 102 zugeordneten MSISDN, die zur Identifikation der zu konfigurierenden Portalseite herangezogen wird, und anhand eines Passworts, die von dem Nutzer an dem Konfigurationsendgerät eingegeben, zum Portalserver 106 übertragen und dort geprüft werden.

Die Anzeigeeinrichtung 124 des Konfigurationsendgeräts 120 weist vorzugsweise eine größere Darstellungsfläche auf als die Anzeigeeinrichtung 112 des Endgeräts 102, wodurch eine komfortable Auswahl der Widgetelemente der personalisierten Portalseite erfolgen kann. Insbesondere ist das Konfigurationsendgerät 120 in einer Ausgestaltung ein Personal Computer (PC), der über eine als üblicher Computerbildschirm ausgestalteten Anzeigeeinrichtung 124 verfügt. Bei dem Datennetzwerk 122, welches das Konfigurationsendgerät 120 mit dem Portalserver 106 verbindet, handelt es sich etwa um das Internet.

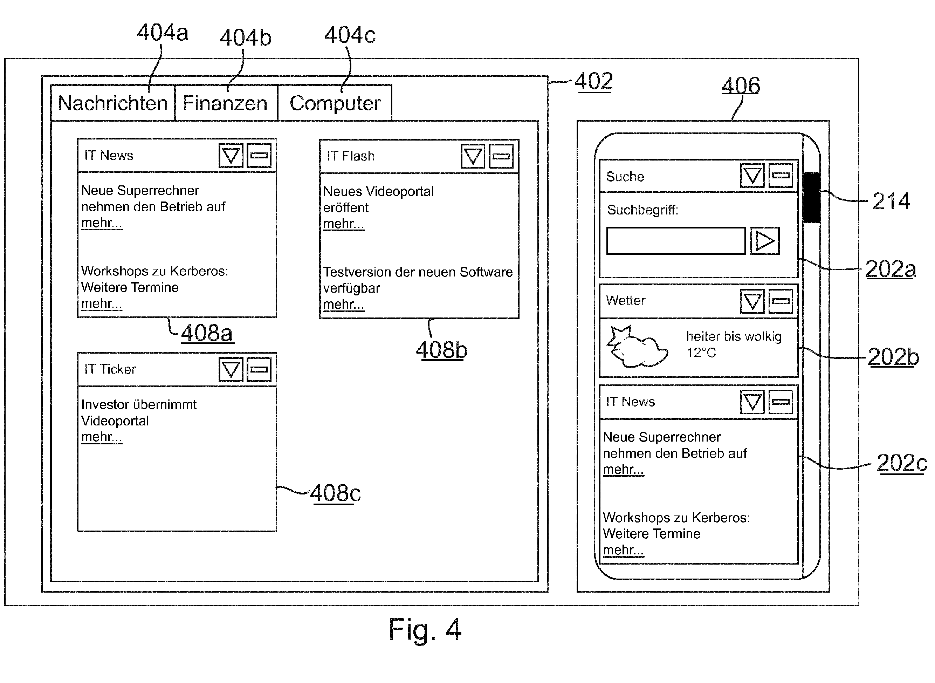

In Figur 4 ist in einer schematischen Darstellung beispielhaft eine grafische Benutzeroberfläche zur Konfiguration der Portalseite dargestellt. Die grafische Benutzeroberfläche umfasst einen Auswahlbereich 402, in dem die Fenster auswählbarer Widgetelemente dargestellt werden. Die Widgetelemente können nach vorgegebenen Kategorien sortiert sein, wie beispielsweise "Community", "Finanzen", "Musik", "News", "Tools" und "TV/Video". Für jede Kategorie wird ein Bedienelement 404a,b,c bereitgestellt, bei dessen Betätigung die Widgetelemente in den Auswahlbereich 402 dargestellt werden, die der entsprechenden Kategorie zugeordnet sind.

Die Darstellung der Widgetelemente entspricht vorzugsweise der von den Widgetelementen innerhalb der Portalseite bereitgestellten Darstellung. Dies bedeutet, dass die grafische Benutzeroberfläche für jedes Widgetelement ein Fenster umfasst, wie es innerhalb der Portalseite von dem Widgetelement bereitgestellt wird. Die in dem Auswahlbereich 402 dargestellten, für eine Auswahl durch den Nutzer zur Verfügung stehenden Fenster sind dabei in Figur 4 mit den Bezugsziffern 408a,b,c versehen.

Darüber hinaus umfasst die grafische Benutzeroberfläche einen Simulationsbereich 406, der eine Darstellung der Portalseite mit den Widgetelementen enthält, die momentan von dem Nutzer ausgewählt sind. Die Darstellung entspricht der Darstellung der Portalseite auf der Anzeigeeinrichtung 112 des Endgeräts 102 des Nutzers und umfasst die von den bereits ausgewählten Widgetelementen bereitgestellten Fenster 202a,b,c.

Um die von den Widgetelementen bereitgestellten Fenster 202a,b,c, 408a,b,c in dem Auswahlbereich 402 und in dem Simulationsbereich 406 in der gleichen Weise darzustellen, wie innerhalb der Darstellung der Portalseite an der Anzeigeeinrichtung 112 des Endgeräts 102 des Nutzers, werden die Widgetelemente von der Darstellungseinheit 116 des Portalservers 106 angepasst. Dabei verwendet die Darstellungseinheit 116 das Darstellungsprofil, das dem verwendeten Endgerät 102 des Nutzers zugeordnet ist.

Als Datenbasis für die Darstellung der Portalseite innerhalb des Simulationsbereichs 406 wird vorzugsweise der dem Nutzer zugeordnete Eintrag in der Portaldatenbank 128 herangezogen. Der Datenbankeintrag legt dabei die anzuzeigenden Widgetelemente sowie die Reihenfolge der Widgetelemente fest.

Die Auswahl eines Widgetelements und die Integration des Widgetelements in die Portalseite erfolgt mittels "Drag & Drop". Dabei ist vorgesehen, das Fenster 408a,b,c eines gewünschten Widgetelements mittels der Eingabeeinrichtung 126 des Konfigurationsendgeräts 120 ausgewählt und innerhalb der grafischen Benutzeroberfläche von dem Auswahlbereich 402 in den Simulationsbereich 406 bewegt werden kann. Innerhalb des Simulationsbereichs 406 kann das Fenster 408a,b,c in einer gewünschten Weise positioniert werden. Nach der Positionierung des Fensters 408a,b,c innerhalb des Simulationsbereichs 406 ist ein Widgetelement ausgewählt, und das Fenster 408a,b,c wird innerhalb der Portalseite angezeigt, bis es von der Portalseite entfernt wird.

Um ein Widgetelement von der Portalseite zu entfernen, kann das von dem Widgetelement bereitgestellte Fenster 202a,b,c wie zuvor beschrieben, ein Bedienelement 208b umfassen, bei dessen Betätigung das Widgetelement aus der Portalseite gelöscht wird. Darüber hinaus kann ein Widgetelement auch innerhalb der grafischen Benutzeroberfläche von der Portalseite entfernt werden. Dies geschieht vorzugsweise ebenfalls mittels "Drag & Drop" in ähnlicher Weise wie die Integration eines Widgetelements in die Portalseite. Dabei wird das Fenster 202a,b,c des zu entfernenden Widgetelements mittels der Eingabeeinrichtung 126 des Konfigurationsendgeräts 120 innerhalb des Simulationsbereichs 406 ausgewählt und innerhalb der grafischen Benutzeroberfläche aus den Simulationsbereich 406 hinaus bewegt. Sobald sich das Fenster 202a,b,c nicht mehr in dem Simulationsbereich 406 befindet, ist das entsprechende Widgetelement von der Portalseite gelöscht.

Vorzugsweise werden ausgewählte Widgetelemente, die bereits in die Portalseite integriert sind, innerhalb des Auswahlbereichs 402 der grafischen Benutzeroberfläche gekennzeichnet. Auf diese Weise kann der Nutzer sofort erkennen, welche Widgetelemente er bereits der Portalseite hinzugefügt hat. Die Kennzeichnung kann beispielsweise durch ein Symbol erfolgen. Sobald ein Widgetelement von der Portalseite gelöscht worden ist, wird die Kennzeichnung entfernt. Wählt der Nutzer ein Widgetelement aus, dass bereits in seine personalisierte Portalseite integriert ist, erkennt der Portalserver 106 dies und verhindert, dass das Wigdetelement nochmals in die Portalseite eingebettet wird.

Darüber hinaus erlaubt es die grafische Benutzeroberfläche zudem, die Reihenfolge der Fenster 202a,b,c innerhalb der Portalseite zu verändern. Dies geschieht wiederum mittels "Drag & Drop", in dem ein Fenster 202a,b,c innerhalb des Simulationsbereichs 406 mittels der Eingabeeinrichtung 126 des Konfigurationsendgeräts 120 ausgewählt und innerhalb des Simulationsbereichs 406 an eine neue Position in der Portalseite verschoben wird.

Sobald die Konfiguration der Portalseite des Nutzers verändert wird, das heißt, der Portalseite ein Widgetelement hinzugefügt wird, ein Widgetelement von der Portalseite entfernt wird oder die Reihenfolge der Darstellung der Widgetelemente in der Portalseite verändert wird, aktualisiert der Portalserver 106 den dem Nutzer zugeordneten Eintrag in der Portaldatenbank 128 entsprechend. Hierdurch kann eine Synchronisierung der Darstellung der Portalseite an der Anzeigeeinrichtung 112 des Endgeräts 102 und innerhalb des Simulationsbereichs 406 grafischen Benutzeroberfläche erreicht werden, da der Eintrag in der Portaldatenbank 128 die gemeinsame Datenbasis für die Darstellung der Portalseite in den Simulationsbereich 406 der grafischen Benutzeroberfläche sowie für die Darstellung der Portalseite an der Anzeigeeinrichtung 112 des Endgeräts 102 ist.

Um die Portalseite stets mit den momentan ausgewählten Widgetelementen an den Endgerät 102 darzustellen, ist vorzugsweise eine Funktionalität in der Portalseite enthalten, die bewirkt, dass die Darstellung der Portalseite an der Anzeigeeinrichtung 112 des Endgeräts automatisch mit einer vorgegebenen Aktualisierungsfrequenz aktualisiert wird. Die Aktualisierungsfrequenz kann dabei beispielsweise einige Sekunden betragen, so dass insbesondere mittels des Konfigurationsendgeräts 120 vorgenommene Veränderungen der Konfiguration nahezu in Echtzeit zu einer entsprechenden Veränderung der Darstellung der Portalseite an der Anzeigeeinrichtung 112 führen.

In der Portalseite wird diese Funktionalität in einer Ausgestaltung durch eine Applikation implementiert, die während der Anzeige der Portalseite an der Anzeigeeinrichtung 112 Aktualisierungsanforderungen erzeugt, die von dem Endgerät an den Portalserver 106 übermittelt werden. Beim Empfang einer solchen Aktualisierungsanforderung prüft der Portalserver 106 anhand des dem Nutzer zugeordneten Eintrags in der Portaldatenbank 128, ob sich die Konfiguration der Portalseite verändert hat. Ist dies der Fall, übermittelt der Portalserver 106 Aktualisierungsdaten an das Endgerät 102, und die Applikation aktualisiert die Darstellung der Portalseite anhand der Aktualisierungsdaten.

Vorzugsweise umfassen die Aktualisierungsdaten lediglich Änderungen der Portalseite, das heißt, Widgetelemente, die neu in die Portalseite integriert worden sind, sowie Befehle zum Löschen von Darstellungen entfernter Widgetelemente und zur Veränderung der Reihenfolge der Darstellungen der Widgetelemente. Hierdurch wird vermieden, dass bei Veränderungen der Konfiguration der Portalseite Daten in Bezug auf Widgetelemente an das Endgerät 102 übertragen werden müssen, bei denen keine Veränderung erfolgte. Damit wird die zu übertragende Datenmenge reduziert, und Aktualisierungen können rascher übernommen werden. Die in die Portalseite integrierte Applikation zur Durchführung derartiger Aktualisierungen kann beispielsweise auf der zuvor bereits erwähnten AJAX-Technologie basieren.

Wie bereits beschrieben worden ist, kann die Portalseite Widgetelemente zur Darstellung von Informationen enthalten, die in einer vorgegebenen Zusammenstellung von einer Informationsquelle 134 oder mehreren Informationsquellen bezogen und fortlaufend aktualisiert werden. Von der in dem Portalserver 106 enthaltenen Leseeinrichtung 132 werden diese Informationen über das Netzwerk 130 von der vorgesehenen Informationsquelle 134 abgerufen. Die Quelle 134 aktualisiert die in den Zusammenstellungen enthaltenen Informationen bedarfsweise. Dies bedeutet, dass immer dann aktualisierte Informationen von der Informationsquelle 134 bereitgestellt werden, wenn eine Aktualisierung aufgrund aktueller Geschehnisse erforderlich wird.

Die Informationsquelle 134 stellt die Informationen üblicherweise unter einer der Zusammenstellung zugeordneten Netzwerkadresse, insbesondere einer URL (Uniform Resource Locator), innerhalb des Datennetzwerks 130 in einem Standardformat bereit. Hierbei kann es sich beispielsweise um ein XML-Format handeln, das insbesondere dann verwendet wird, wenn es sich bei der Zusammenstellung um einen RSS-Feed handelt. Die Netzwerkadresse der Zusammenstellung kann innerhalb der Leseeinrichtung 132 vorkonfiguriert sein, um die Leseeinrichtung 132 zur Abfrage von in der Zusammenstellung enthaltenen Informationen einzurichten. Gleichfalls kann es jedoch auch vorgesehen sein, dass die Netzwerkadresse von dem Nutzer des Endgeräts 102 bereitgestellt wird. Insbesondere kann die grafische Benutzeroberfläche zur Konfiguration der Portalseite beispielsweise die Eingabe der Netzwerkadresse ermöglichen. Damit kann der Nutzer selbst Zusammenstellungen vorgeben, deren Informationen von der Leseeinrichtung 132 abgerufen werden.

Entsprechend der vorgesehenen Zusammenstellung werden die Informationen von der Informationsquelle 134 unterschiedlich häufig aktualisiert. So besteht beispielsweise bei Börsennachrichten eine relativ hohe Aktualisierungsrate, während die Aktualisierungsrate bei anderen Nachrichten wesentlich geringer sein kann. Vorzugsweise ruft die Leseeinrichtung 132 daher Informationen verschiedener Zusammenstellungen mit unterschiedlichen Aktualisierungsfrequenzen von den entsprechenden Informationsquellen 134 ab.

Die für eine Zusammenstellung vorgesehene Aktualisierungsfrequenz wird vorzugsweise dynamisch von dem Portalserver 106 beziehungsweise der Leseeinrichtung 132 ermittelt.

In einer Ausgestaltung werden verschiedene Zeitabstände zwischen einem minimalen und einem maximalen Zeitabstand vorgegeben. Bei dem minimalen Zeitabstand kann es sich beispielsweise um eine oder mehrere Sekunden handeln und bei dem maximalen Zeitabstand um einen oder mehrere Tage. Die Schrittweiten zwischen den verschiedenen Zeitabständen können regelmäßig sein oder beliebig gewählt werden.

Bei dieser Ausgestaltung entspricht der zeitliche Abstand zwischen zwei Abfragen der Informationsquelle jeweils einen der vorgegebenen Zeitabstände. Für den zeitlichen Abstand zwischen den ersten beiden Abfragen wird zudem einer der vorgegebenen Zeitabstände festgelegt.

Nach jedem Informationsabruf werden die erhaltenen Informationen innerhalb der Leseeinrichtung 132 gespeichert. Sie ersetzen dabei die bei der vorangegangen Abfrage erhaltenen Informationen, das heißt, bei jedem Informationsabruf werden die im vorangegangenen Schritt abgerufenen Informationen ersetzt. Zuvor wird jedoch geprüft, ob die in der Leseeinrichtung 132 gespeicherten, bei der vorangegangenen Abfrage erhaltenen Informationen mit den Informationen übereinstimmen, die aufgrund der aktuellen Abfrage erhalten worden sind.

Ist dies der Fall, dann ist die Zusammenstellung innerhalb des zwischen den Abfragen liegenden Zeitabstands nicht aktualisiert worden. Daher wird der Zeitabstand bis zur nächsten Abfrage um einen Schritt erhöht. Dies bedeutet, dass der nächstgrößere vorgegebene Zeitabstand bis zur nächsten Abfrage eingehalten wird. Wird jedoch festgestellt, dass sich die bei der vorangegangenen Abfrage erhaltenen Informationen von den Informationen unterscheiden, die aufgrund der aktuellen Abfrage erhalten worden sind, dann wurde die Zusammenstellung innerhalb des zwischen den Abfragen liegenden Zeitabstands aktualisiert. In diesem Fall wird der Zeitabstand bis zur nächsten Abfrage um einen Schritt verringert. Es wird also der nächstkleinere vorgegebene Zeitabstand bis zur nächsten Abfrage eingehalten.

Sofern die Aktualisierungsrate der Zusammenstellung konstant ist, stellt sich damit nach einer Anlaufphase ein Zustand ein, in dem die Zeitabstände zwischen zwei Abfragen zwischen zwei benachbarten Werten pendeln. Die Aktualisierungsrate liegt zwischen diesen Werten oder der Zeitabstand zwischen zwei Aktualisierungen entspricht einem der Werte. Das eingesetzte Verfahren entspricht einem Lernverfahren, bei dem sich die Leseeinrichtung 132 automatisch an die Aktualisierungsrate einer Zusammenstellung anpasst.

In einer weiteren Ausgestaltung wird die Aktualisierungsfrequenz, mit der die Leseeinrichtung 132 die Zusammenstellung abfragt, anhand einer Beobachtung der Zusammenstellung über einen vorgegebenen längeren Zeitraum ermittelt. Während dieses Zeitraums fragt die Leseeinrichtung 132 die Zusammenstellung mit einer ausreichend groß gewählten Frequenz ab und prüft bei jeder Abfrage, ob sich die in der Zusammenstellung enthaltenen Informationen verändert haben. Die Zeiträume zwischen den Abfragen, bei denen Veränderungen festgestellt worden sind, werden jeweils gespeichert und zur Bestimmung der nach dem Beobachtungszeitraum einzustellenden Aktualisierungsfrequenz herangezogen. Insbesondere können die Aktualisierungsintervalle dabei so gewählt werden, dass die Zeitabstände zwischen zwei Abfragen dem Mittelwert oder dem Minimalwert der gespeicherten Zeiträume entspricht.

Beim Aufruf der Portalseite von dem Endgerät 102 des Nutzers aus oder beim Start der grafischen Benutzeroberfläche zur Konfiguration der Portalseite werden von den Widgetelementen, die den betreffenden Zusammenstellungen zugeordnet sind, die Informationen angezeigt, die zu diesem Zeitpunkt in der Leseeinrichtung 132 gespeichert sind. Hierdurch werden insbesondere auch dann Informationen einer Zusammenstellung angezeigt, wenn die Informationsquelle 134, welche die Zusammenstellung bereitstellt, temporär nicht verfügbar ist.

Darüber hinaus werden die Informationen, wie zuvor bereits erwähnt, während der Anzeige der Portalseite an der Anzeigeeinrichtung 112 des Endgeräts 102 beziehungsweise während der Anzeige der grafischen Benutzeroberfläche an der Anzeigeeinrichtung 124 des Konfigurationsendgeräts 120 fortlaufend aktualisiert. Hierzu umfassen die Widgetelemente eine Funktionalität, um Aktualisierungsanforderungen in vorgegebenen Zeitabständen an den Portalserver 106 zu senden, der die Aktualisierungsanforderungen mit der Übermittelung von aktualisierten Informationen beantwortet.

In einer Ausgestaltung werden die Aktualisierungsanforderungen von den Widgetelementen mit einer fest vorgegebenen Frequenz erzeugt. Die Frequenz wird dabei so groß gewählt, dass längere Verzögerungen bei der Übermittelung aktualisierter Informationen von dem Portalserver 106 vermieden werden. Insbesondere kann der Zeitabstand zwischen zwei Aktualisierungsanforderungen dem minimalen vorgegebenen Abstand zwischen zwei Abfragen der Zusammenstellung durch den Portalserver entsprechen.

Ferner kann es vorgesehen sein, dass eine von einem Widgetelement erzeugte Anforderung von dem Portalserver 106 nur dann mit der Übermittelung von Informationen der Zusammenstellung beantwortet wird, wenn die Informationen innerhalb des Zeitraums seit der vorangegangenen Anforderung aktualisiert worden sind. Hierdurch wird eine bedarfsgerechte Übermittelung von Informationen von dem Portalserver 106 an das Endgerät 102 beziehungsweise an das Konfigurationsendgerät 120 erreicht und der Datenverkehr reduziert.

Die bedarfsgerechte Übermittelung der Informationen kann beispielsweise dadurch erreicht werden, dass Informationen mit einer eindeutigen Kennung, wie etwa einer fortlaufenden Nummer, versehen werden, wenn sie in der Leseeinrichtung 132 gespeichert werden. Den Widgetelementen werden die Informationen zusammen mit der Kennung bereitgestellt. In die Aktualisierungsanforderung wird die Kennung der aktuell in einem Widgetelement enthaltenen Informationen eingebracht. Wenn der Portalserver 106 eine solche Aktualisierungsanforderung empfängt, prüft er, ob die enthaltene Kennung mit der Kennung der in der Leseeinrichtung 132 gespeicherten Informationen übereinstimmt. Ist dies der Fall, dann brauchen keine aktualisierten Informationen übermittelt werden. Unterscheiden sich die Kennungen hingegen, stellt der Portalserver 106 aktualisierte Informationen für die Zusammenstellung bereit, indem er die Aktualisierungsanforderung mit der Übermittelung der aktualisierten Informationen beantwortet.

Gleichfalls kann es jedoch auch vorgesehen sein, dass die zeitlichen Abstände zwischen den von einem Widgetelement erzeugten Aktualisierungsanforderungen an die Zeitabstände zwischen den Abfragen der betreffenden Zusammenstellung durch die Leseeinrichtung 132 angepasst werden.

Sofern sich die Zeitabstände zwischen den Abfragen der betreffenden Zusammenstellung durch die Leseeinrichtung 132 verändern, kann dies dadurch erreicht werden, dass die Widgetelemente so ausgestaltet werden, dass die Zeitabstände zwischen zwei Aktualisierungsanforderungen während der Laufzeit durch Vorgaben angepasst werden können. Entsprechende Vorgaben sind vorzugsweise in den Antworten des Portalservers 106 auf die Aktualisierungsanforderung enthalten. Dies bedeutet, dass die Antwort des Portalservers 106 auf eine Aktualisierungsanforderung den Zeitpunkt bestimmt, in dem die nächste Aktualisierungsanforderung erzeugt und an den Portalserver 106 übermittelt werden soll. Nach dem Empfang der Antwort legt das Widgetelement den Zeitpunkt für die Erzeugung der nächsten Aktualisierungsanforderung entsprechend der in der Antwort enthaltenen Vorgabe fest oder startet eine Zeitschaltfunktion so, dass der Zeitpunkt für die Erzeugung der nächsten Aktualisierungsanforderung entsprechend der Vorgabe gemeldet wird. Die Vorgabe wird von dem Portalserver 106 entsprechend dem Zeitpunkt der nächsten Abfrage der Zusammenstellung durch die Leseeinrichtung 132 festgelegt. Insbesondere kann die Vorgabe dabei so festgelegt werden, dass die Aktualisierungsanforderung im Wesentlichen gleichzeitig mit der Abfrage der Zusammenstellung beziehungsweise in einem kurzen zeitlichen Abstand danach erzeugt wird.

Hierdurch wird eine Synchronisierung der Aktualisierungsanforderungen und der Abfragen der Zusammenstellung erreicht. Dies führt zur Vermeidung unnötiger Aktualisierungsanforderungen, wodurch insbesondere der Datenverkehr erheblich reduziert wird.

Sofern feste Zeitabstände zwischen den Abfragen einer Zusammenstellung durch die Leseeinrichtung 132 bestehen, kann eine Synchronisierung auch dadurch erreicht werden, dass das zugehörige Widgetelement derart vorkonfiguriert wird, dass die Aktualisierungsanforderungen ebenfalls in diesen Zeitabständen erzeugt werden. Die entsprechende Konfiguration der Widgetelemente in kann beispielsweise dann vorgenommen werden, wenn die Portalseite von dem Endgerät 102 aus aufgerufen worden ist oder mittels des Konfigurationsendgeräts 120 die grafische Benutzeroberfläche angefordert wird.

Zur Konfiguration der Portalseite kann es auch vorgesehen sein, dass die Portalseite eine weitere Schnittstelle bereitgestellt wird, die eine Konfiguration mittels des Endgeräts 102 ermöglicht. Vorzugsweise kann die Konfiguration dabei vorgenommen werden, während die Portalseite an der Anzeigeeinrichtung 112 des Endgeräts 102 dargestellt wird.

In einer Ausgestaltung wird die Schnittstelle durch eine in der Portalseite enthaltene Funktionalität bereitgestellt, insbesondere durch ein oder mehrere weitere Widgetelemente, die im Folgenden als Konfigurationswidgetelemente bezeichnet werden. Diese können beispielsweise mittels eines Bedienelements aufgerufen werden, dass in einer Kopfzeile der Portalseite dargestellt wird.

Ein Konfigurationswidgetelement erlaubt dabei insbesondere eine Nutzerinteraktion zur Auswahl vorkonfigurierter, d.h. bereits auf dem Portalserver 106 eingerichteter, Widgetelemente. Wird dieses Konfigurationswidgetelement aufgerufen, stellt es innerhalb der Portalseite ein Fenster bereit, das an der Anzeigeeinrichtung 112 des Endgeräts 102 dargestellt wird.

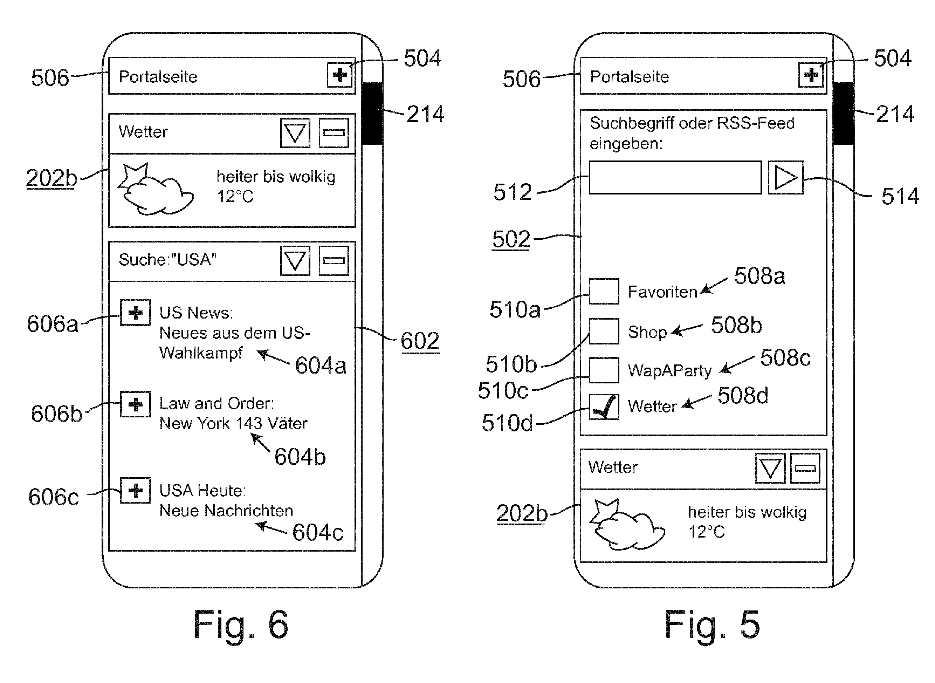

In Figur 5 ist beispielhaft ein Fenster 502 dargestellt, welches von diesem Konfigurationswidgetelement bereitgestellt wird, nachdem es beispielsweise durch Betätigung eines Bedienelements 504 in einer Kopzeile 506 der Portalseite aufgerufen worden ist. Gleichfalls kann das Widgetelement jedoch auch auf andere Weise aufgerufen werden, oder das Fenster 502 kann permanent innerhalb der Portalseite angezeigt werden. Das Fenster umfasst eine Liste mit Listenelementen 508a,b,c,d in der die verfügbaren Widgetelemente angezeigt werden. Die Widgetelemente können dabei in der Liste etwa anhand ihres Titels identifiziert werden. Jedem Listenelement 508a,b,c,d ist innerhalb des Fensters 502 ein Bedienelement 510a,b,c,d zugeordnet.

Eine Betätigung des Bedienelements 510a,b,c,d mittels der Eingabeeinrichtung 114 des Endgeräts 102 führt zu einer Auswahl des entsprechenden Widgetelements. Dabei generiert das Konfigurationswidgetelement aufgrund der Betätigung des Bedienelements 510a,b,c,d eine Nachricht, die von dem Endgerät 102 an den Portalserver 106 gesendet wird und das ausgewählte Widgetelement identifiziert. Nach dem Empfang der Nachricht fügt der Portalserver 106 der Portalseite das ausgewählte Widgetelement hinzu. Hierfür aktualisiert der Portalserver 106 insbesondere den dem Nutzer zugeordneten Eintrag in der Portaldatenbank 128 entsprechend. Als Antwort auf die nächste Aktualisierungsanforderung übermittelt der Portalserver 106 Aktualisierungsdaten an das Endgerät 102, die das ausgewählte Widgetelement enthalten. Ferner kann es auch vorgesehen sein, dass der Portalserver 106 die Aktualisierungsdaten bereits aufgrund des Empfangs der Nachricht erzeugt und an das Endgerät 102 sendet.

Bereits ausgewählte Widgetelemente können in der Liste innerhalb des Fensters 502 ebenfalls dargestellt werden. Vorzugsweise werden diese jedoch als bereits ausgewählt markiert. In einer Ausgestaltung handelt es sich bei den Bedienelementen 510a,b,c,d um Kästchen, die bei Betätigung mit einem Symbol, beispielsweise einem Haken versehen werden. Für die ausgewählten Widgetelemente ist das Symbol bereits vor der Betätigung enthalten. Andere Ausgestaltungen sind jedoch ebenfalls möglich.

Darüber hinaus erlaubt das Konfigurationswidgetelement die Hinzufügung von Widgetelementen zur Anzeige von Informationen aus Zusammenstellungen, die zuvor nicht in der Leseeinrichtung 132 konfiguriert waren. Hierzu bietet das Konfigurationswidgetelement in einer Ausgestaltung die Möglichkeit zur Eingabe der Netzwerkadresse einer gewünschten Zusammenstellung bzw. der die Zusammenstellung bereitstellenden Informationsquelle 134. Nach der Eingabe wird die Netzwerkadresse an den Portalserver 106 übertragen. Nach dem Empfang der Netzwerkadresse in dem Portalserver 106 wird die Zusammenstellung in der Leseeinrichtung 132 eingerichtet, d.h. die Leseinrichtung ruft fortan Informationen aus dieser Zusammenstellung ab. Ferner wird ein Widgetelement zur Darstellung dieser Informationen erzeugt, welches der Portalseite des Nutzers in der zuvor beschriebenen Weise hinzugefügt werden kann. Dazu wird insbesondere der dem Nutzer zugeordnet Eintrag in der Portaldatenbank aktualisiert.

Bei der in der Figur 5 beispielhaft dargestellten Ausgestaltung kann die Eingabe der Netzwerkadresse beispielsweise in einem in dem Fenster 502 dargestellten Eingabefeld 512 mittels der Eingabeeinrichtung des Endgeräts 102 erfolgen. Ferner kann ein Bedienelement 514 vorgesehen sein, bei dessen Betätigung die Netzwerkadresse der Zusammenstellung an den Portalserver 106 gesendet wird.

In einer weiteren Ausgestaltung wird eine Schnittstelle zum Suchen einer Zusammenstellung bereitgestellt. Diese Schnittstelle erlaubt es, einen Suchbegriff einzugeben. Aufgrund der Eingabe des Suchbegriffs wird dann eine Auswahl von Zusammenstellungen angezeigt. Die Anzeige kann beispielsweise den Titels und/oder eine Schlagzeile der Zusammenstellung umfassen. Aus der Auswahl kann dann eine Zusammenstellung ausgewählt werden. Aufgrund der Auswahl der Zusammenstellung wird die Zusammenstellung dann innerhalb der Leseinrichtung 132 derart eingerichtet, dass die Leseeinrichtung 132 fortan Informationen der Zusammenstellung von der entsprechenden Informationsquelle 134 abruft. Ferner wird ein Widgetelement zur Darstellung der Informationen der Zusammenstellung innerhalb der Portalseite des Nutzers erzeugt , welches der Portalseite hinzugefügt werden kann. Hierzu wird vorzugsweise der dem Nutzer zugeordnete Eintrag in der Portaldatenbank 128 entsprechend aktualisiert.

Die Suche bezieht sich vorzugsweise auf den Titel einer Zusammenstellung und/oder auf den Inhalt der enthaltenden Informationen bzw. Schlagzeilen.

Der Suchbegriff kann innerhalb der grafischen Benutzeroberfläche an dem Konfigurationsendgerät 120 eingegeben werden oder innerhalb des Eingabefeldes 512 des von dem Konfigurationswidgetelements bereitgestellten Fensters 502. Letztere Ausführungsform ermöglicht es, Zusammenstellungen auch von dem Endgerät 102 aus zu suchen und der Portalseite hinzuzufügen, während die Portalseite an der Anzeigeeinrichtung 112 des Endgeräts 102 angezeigt wird.

Nach Eingabe des Suchbegriffs wird dieser vorzugsweise an den Portalserver 106 übertragen der die Suche innerhalb des Datennetzwerks 130 entsprechend ausführt. Die Ergebnisse der Suche werden von dem Portalserver 106 aufbereitet und an der grafischen Benutzeroberfläche bzw. innerhalb der an dem Endgerät 102 angezeigten Portalseite bereitgestellt.

Im letzteren Fall kann beispielsweise ein Widgetelement erzeugt werden, welches die Ergebnisse der Suche beinhaltet. Dieses wird anhand entsprechender Aktualisierungsdaten an das Endgerät 102 gesendet, so dass eine von dem Widgetelement bereitgestellte grafische Darstellung innerhalb der Portalseite angezeigt wird. In Figur 6 ist ein entsprechendes Fenster 602 das die Ergebnisse einer Suche enthalt innerhalb der Anzeige der Portalseite dargestellt. Dieses umfasst eine Liste, deren Elemente 604a,b,c den Suchergebnissen entsprechen. Durch die Betätigung eines Bedienelements 606a,b,c können aus der Liste Suchergebnisse ausgewählt werden. Die Auswahl wird dann an den Portalserver 106 übermittelt, woraufhin dieser die Zusammenstellung innerhalb der Leseinrichtung 132 wie zuvor beschrieben einrichtet und ein Widgetelement zur Anzeige der in der ausgewählten Zusammenstellung enthaltenen Informationen erzeugt und der Portalseite hinzufügt. Als Antwort auf Auswahl übermittelt der Portalserver 106 zudem vorzugsweise Aktualisierungsdaten an das Endgerät 102, die das erzeugte Widgetelement enthalten, so dass die Informationen nach der Auswahl in der Portalseite angezeigt werden.

Sofern die Suche von der grafischen Benutzeroberfläche aus initiiert worden ist werden die von dem Portalserver 106 ermittelten Ergebnisse der Suche an das Konfigurationsendgerät 120 übertragen und innerhalb der grafischen Benutzeroberfläche angezeigt. Gleichfalls können dabei eine oder mehrere Zusammenstellungen aus den Ergebnissen ausgewählt werden. Aufgrund der Auswahl richtet der Portalserver die Abfrage der ausgewählten Zusammenstellungen in der Leseinrichtung 132 ein und erzeugt vorzugsweise Widgetelemente zur Anzeige der Informationen der Zusammenstellungen. Diese Widgetelemente werden dabei vorzugsweise dem Auswahlbereich 402 der grafischen Benutzeroberfläche hinzugefügt und können von dem Nutzer in der zuvor bereits beschriebenen Weise ausgewählt werden, um sie in die Portalseite zu integrieren.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt.

Weitere Varianten der Erfindung und ihre Ausführung ergeben sich für den Fachmann aus der vorangegangenen Offenbarung, den Figuren und den Patentansprüchen. In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen. In den Patentansprüchen angegebene Bezugszeichen sind nicht als Beschränkungen der eingesetzten Mittel und Schritte anzusehen.

## Patentansprüche

1. System zum Bereitstellen einer anpassbaren Portalseite an einem ersten Endgerät 102 eines Nutzers, wobei die Portalseite wenigstens ein ausgewähltes Widgetelement zum Anzeigen von Informationen und/oder Zugreifen auf einen webbasierten Dienst beinhaltet, welches eine grafische Darstellung (202a,b,c; 408a,b,c) bereitstellt, die ein Bestandteil einer Darstellung der Portalseite an einer Anzeigeeinrichtung des ersten Endgeräts (102) ist, umfassend eine Servereinrichtung (106), von der die Portalseite mittels des ersten Endgeräts (102) abrufbar ist, wobei die Servereinrichtung (106) eine Schnittstelle bereitstellt, über welche das Widgetelement mittels eines zweiten Endgeräts auswählbar ist.

2. System nach Anspruch 1, wobei die Schnittstelle eine an einer Anzeigeeinrichtung(124) des zweiten Endgeräts (120) darstellbare grafische Benutzeroberfläche umfasst, und wobei die grafische Benutzeroberfläche einen Simulationsbereich (406) aufweist, in dem eine Darstellung der Portalseite an der Anzeigeeinrichtung (112) des ersten Endgeräts (102) simuliert werden kann.

3. System nach Anspruch 2, wobei die grafische Benutzerschnittstelle wenigstens einen Auswahlbereich (402) umfasst, in dem von auswählbaren Widgetelementen bereitgestellte grafische Darstellungen (408a,b,c) anzeigbar sind, und wobei eine von einem auswählbaren Widgetelement bereitgestellte Darstellung (408a,b,c) mittels einer Eingabeeinrichtung (126) des zweiten Endgeräts (120) von dem Auswahlbereich (402) in den Simulationsbereich (406) bewegt werden kann, um das Widgetelement auszuwählen.

4. System nach Anspruch 3, wobei der Simulationsbereich (406) aufgrund der Auswahl des Widgetelements derart aktualisierbar ist, dass die simulierte Darstellung der Portalseite die von dem ausgewählten Widgetelement bereitgestellte grafische Darstellung (202a,b,c; 408a,b,c) umfasst.

5. System nach einem der vorangegangenen Ansprüche, wobei die Portalseite eine Funktionalität umfasst, um einen Inhalt der Portalseite während ihrer Darstellung an der Anzeigeeinrichtung (112) des ersten Endgeräts (102) durch eine Abfrage der Servereinrichtung (106) derart zu aktualisieren, dass sie die momentan ausgewählten Widgetelemente beinhaltet.

6. System nach einem der vorangegangenen Ansprüche, umfassend eine Darstellungseinheit (116), die dazu ausgebildet ist, die von einem Widgetelement bereitgestellte grafische Darstellung (202a,b,c; 408a,b,c) an die Anzeigeeinrichtung (112) des ersten Endgeräts (102) anzupassen.

7. System nach Anspruch 6, wobei die in dem Simulationsbereich (406) und/oder in dem Auswahlbereich (402) der grafischen Benutzeroberfläche anzeigbare, von einem Widgetelement bereitgestellte grafische Darstellung (202a,b,c; 408a,b,c) mittels der Darstellungseinheit (116) an die Anzeigeeinrichtung (112) des ersten Endgeräts (102) anpassbar ist.

8. Verfahren zum Bereitstellen einer anpassbaren Portalseite an einem ersten Endgerät (102) eines Nutzers, wobei die Portalseite wenigstens ein ausgewähltes Widgetelement zum Anzeigen von Informationen und/oder Zugreifen auf einen webbasierten Dienst beinhaltet, welches eine grafische Darstellung (202a,b,c; 408a,b,c) bereitstellt, die ein Bestandteil einer Darstellung der Portalseite an einer Anzeigeeinrichtung (112) des ersten Endgeräts (102) ist, wobei die Portalseite von einer Servereinrichtung (106) an dem ersten Endgerät (102) verfügbar gemacht wird, und wobei die Servereinrichtung (106) eine Schnittstelle bereitstellt, über welche das Widgetelement mittels eines zweiten Endgeräts (120) auswählbar ist.

9. Verfahren zum Bereitstellen einer eine Darstellung mehrerer Bedienelemente (208a,b) umfassenden Webseite an einer Anzeigeeinrichtung (112) eines Endgerätes (102), bei dem
- eine die Anzeigeeinrichtung (112) spezifizierende Kennung erfasst wird, und
- eine Größe der Darstellung der Bedienelemente (208a,b) und/oder ein Abstand zwischen den Darstellungen der Bedienelemente (208a,b) innerhalb der Webseite in Abhängigkeit von der erfassten Kennung festgelegt wird.

10. Darstellungseinrichtung (116) zum Bereitstellen einer eine Darstellung mehrerer Bedienelemente (208a,b) umfassenden Webseite an einer Anzeigeeinrichtung (112) eines mit der Darstellungseinrichtung (116) verbundenen Endgeräts (102), wobei die Darstellungseinrichtung (116) dazu ausgestaltet ist, eine die Anzeigeeinrichtung (112) spezifizierende Kennung zu erfassen und eine Größe der Darstellung der Bedienelemente (208a,b) und/oder einen Abstand zwischen den Darstellungen der Bedienelementen (208a,b) innerhalb der Webseite in Abhängigkeit von der erfassten Kennung zu bestimmen.

11. Verfahren zum Bereitstellen von sich verändernden Informationen, die von einer Informationsquelle (134) erhalten werden, innerhalb einer an einem Endgerät (102) darstellbaren Webseite, bei dem
- die Informationen von der Informationsquelle (134) in vorgegebenen Zeitabständen abgerufen und in einer mit dem Endgerät (102) verbindbaren Servereinrichtung (106) gespeichert werden, und
- ein Widgetelement in die Webseite eingebracht wird, welches dazu ausgestaltet ist, die Informationen von der Servereinrichtung (106) abzurufen.

12. Verfahren nach Anspruch 11, wobei die von der Informationsquelle (134) abgerufenen Informationen mit den in der Servereinrichtung (106) gespeicherten Informationen verglichen werden, und ein Zeitabstand bis zum nächsten Abruf der Informationen von der Informationsquelle (134) vergrößert wird, wenn die abgerufenen Informationen und die gespeicherten Informationen übereinstimmen.

13. Verfahren nach Anspruch 11 oder 12, wobei die von der Informationsquelle (134) abgerufenen Informationen mit den in der Servereinrichtung (106) gespeicherten Informationen verglichen werden, und ein Zeitabstand bis zum nächsten Abruf der Informationen von der Informationsquelle (134) verringert wird, wenn sich die abgerufenen Informationen von den gespeicherten Informationen unterscheiden.

14. Verfahren nach einem der Ansprüche 11 bis 13, wobei das Widgetelement die Informationen von der Servereinrichtung (106) in vorgegebenen Zeitabständen abruft, die an die Zeitabstände zwischen den Abfragen der Informationsquelle (134) angepasst sind.

15. Servereinrichtung (106) zum Bereitstellen von sich verändernden Informationen, die von einer Informationsquelle (134) erhalten werden, innerhalb einer an einem Endgerät (102) darstellbaren Webseite, umfassend
- eine Leseeinrichtung (132), die dazu ausgestaltet ist, Informationen von der Informationsquelle (134) in vorgegebenen Zeitabständen abzurufen und die abgerufenen Informationen zu speichern, und
- ein Mittel zum Erzeugen der Webseite, das dazu ausgebildet ist, ein Widgetelement in die Webseite zu integrieren, welches dazu ausgestaltet ist, die Informationen von der Servereinrichtung (106) abzurufen.
